Europäisches Patentamt

European Patent Office

Office européen des brevets

⑱

(11) Publication number: **0 221 641**
**B1**

(12) # EUROPEAN PATENT SPECIFICATION

(45) Date of publication of patent specification: **18.04.90**

(21) Application number: **86306632.0**

(22) Date of filing: **28.08.86**

(51) Int. Cl.⁵: **G 21 C 3/32**

(54) **Reconstitutable nuclear fuel assembly.**

(30) Priority: **12.09.85 US 775208**

(43) Date of publication of application:
**13.05.87 Bulletin 87/20**

(45) Publication of the grant of the patent:
**18.04.90 Bulletin 90/16**

(84) Designated Contracting States:
**BE DE FR GB IT SE**

(56) References cited:
**EP-A-0 098 774**
**EP-A-0 140 588**
**FR-A-2 493 024**
**FR-A-2 533 741**

(73) Proprietor: **WESTINGHOUSE ELECTRIC CORPORATION**
**Westinghouse Building Gateway Center**
**Pittsburgh Pennsylvania 15235 (US)**

(72) Inventor: **Gjertsen, Robert Kenneth**
**126 Penn Lear Drive**
**Monroeville Pennsylvania 15146 (US)**
Inventor: **Wilson, John Francis**
**3560 Meadowgate Drive**
**Murrysville Pennsylvania 15668 (US)**
Inventor: **Shallenberger, John Milton**
**120 West Chapel Ridge Road**
**Pittsburgh Pennsylvania 15238 (US)**

(74) Representative: **van Berlyn, Ronald Gilbert**
**23, Centre Heights**
**London, NW3 6JG (GB)**

Courier Press, Leamington Spa, England.

## Description

The present invention relates generally to a reconstitutable fuel assembly for a nuclear reactor and, more particularly, to an improved top-nozzle attaching structure therefor.

In most nuclear reactors, the reactor core consists of a large number of elongate fuel assemblies each including a plurality of fuel rods and control-rod guide thimbles held in an organized array by grids spaced along the fuel assembly and attached to the control-rod guide thimbles. Top and bottom nozzles at the opposite ends of the fuel assembly are secured to guide thimbles end portions extending slightly above and below the ends of the fuel rods. At the top end of the fuel assembly, the guide thimbles extend into passageways formed in the adapter plate of the top nozzle and these are attached to the nozzle. The guide thimbles may each include an upper sleeve representing the guide thimble end portion which is attached to the top nozzle.

During operation of a fuel assembly in a nuclear reactor, it can happen on occasion that some of the fuel rods develop cracks, due primarily to internal stresses, in which event radioactive fission products may seep into the primary coolant of the reactor. Such products may also be released into a flooded reactor cavity during refueling operations or into the coolant circulated through pools where spent fuel assemblies are stored.

Until recently, gaining access to fuel rods for the purpose of inspection and the replacement of failed rod required the removal of the affected assembly from the nuclear reactor core and the breaking of welds securing the nozzles to the control-rod guide thimbles. The destructive action resulting from applying weld-breaking forces often renders the fuel assembly unfit for further use in the reactor because of the damage done to both the guide thimbles and the nozzle, which prohibits rewelding.

In view of the high costs associated with replacing fuel assemblies and in order to minimize operating and maintenance expenses considerable interest has arisen in reconstitutable fuel assemblies. The general approach to making a fuel assembly reconstitutable is to provide it with a removable top nozzle. Applicant's Publication No. EP—A—0,140,588 discloses a reconstitutable fuel assembly having a removable top nozzle which is attached to upper end portions of the control-rod guide thimbles by means of an attaching structure comprising a plurality of outer sockets defined in the control-rod passageways extending through the adapter plate of the top nozzle, a plurality of inner sockets formed on the upper ends of the respective guide thimbles, and a plurality of removable locking tubes inserted in the inner sockets so as to maintain them in locking engagement with the inner sockets. Each outer socket has an annular groove formed in the peripheral wall thereof, and each inner socket formed by a hollow upper end portion of the guide thimble, has an annular bulge adapted to mate with the annular groove when the guide-thimble end portion is inserted into the adapter plate passage. Each guide-thimble end portion, or inner socket, also is provided with elongate axial slots permitting the slotted end portion to resiliently collapse, or be compressed, thereby to permit the bulge on the guide-thimble end portion to be resiliently reduced in diameter and, hence, to permit the inner socket on the guide thimble to be inserted into and withdrawn from locking engagement with the outer socket.

Each locking tube is inserted, from above the top nozzle, into a locking position within the hollow upper end portion of the guide thimble forming the associated inner socket. When in its locking position, the locking tube retains the bulge of the inner socket in locking engagement with the annular groove by preventing the inner socket from being compressed, and thereby prevents the inner socket from being withdrawn from the outer socket.

In order to prevent axial displacement and eventual escape of locking tube from their locking positions due to vibration and the like, the locking tubes, after insertion thereof into their locking positions, usually are secured in place by providing each of them with a bulge formed on an upper portion thereof and into mating engagement with the concave side of the circumferential bulge on the associated guide-thimble end portion.

When such fuel assembly is to be reconstituted, it is necessary to remove the locking tubes, either individually or all together, from the top nozzle with the aid of a suitable removal tool or fixture. This usually necessitates their handling as "loose parts" requiring storage, retention, and accountability thereof during the reconstitution of the fuel assembly carried out underwater, and again requires handling of such loose parts when the same locking tubes, if of a reusable type, or new locking tubes replacing the removed tubes must be re-inserted into the guide-thimble end portions and then fixed therein again in their locking positions.

This practice has disadvantages in that (a) a large number of locking tubes must be handled and a large inventory thereof must be maintained; (b) provision must be made for the disposal of irradiated locking tubes to be discarded; (c) after each locking tube is inserted, a remotely controlled deforming operation must be performed to bulge-lock the tube in its locking position; and (d) an inspection of bulges must be carried out, again by remote control, in order to ascertain whether the bulges were properly made to the correct dimension.

It is the principal object of the invention to provide improved top-nozzle attaching structure subject to none of these drawbacks, and the invention accordingly resides in a reconstitutable nuclear fuel assembly including a top nozzle with an adapter plate having at least one passageway therethrough, at least one guide thimble having an upper end portion extending into said passageway, and attaching structure for releasably affixing the adapter plate to said end portion of the guide thimble, said passageway having an annular groove formed circumferentially in the peripheral wall thereof, said guide-thimble end portion having formed thereon an annular bulge which mates with said annular groove, and having formed therein at least one elongate slot which extends axially from the end of the guide-thimble end portion and through said annular bulge to enable resilient collapse of the guide-thimble end portion and thereby dislodgement of the annular bulge from the annular groove, said attaching structure including a locking tube inserted in said guide-thimble end portion for releasably locking the annular bulge in mating engagement with the annular groove, characterized in that said locking tube (a) is axially slidable within said guide-thimble end portion between a locking position and an unlocking position for preventing and permitting, respectively, resilient collapse of the guide-thimble end portion; (b) has a continuous, substantially cylindrical wall configuration; and (c) has disposed on its outer periphery at least one protrusion which extends radially through said elongate slot in the guide-thimble end portion, said protrusion projecting into said annular groove in said passageway when the locking tube is in said locking position, and being yieldable to permit dislodgement of the protrusion from said annular groove and thereby permit movement of the locking tube to said unlocking position.

With this arrangement according to the invention, the locking tube, instead of being removed from the guide-thimble end portion during reconstitution of the fuel assembly, remains within the guide-thimble portion in its unlocking as well as its locking position. This eliminates the need for all the above-mentioned steps associated with the removal and re-insertion of locking tubes to be handled as loose parts. Another advantageous and important feature of the arrangement embodying the invention resides in that the locking tube is not split or slotted for the purpose of rendering it resiliently compressible in order that it can be axially moved within the guide-thimble end portion; instead, it has a continuous (i.e. non-slotted) wall configuration and derives its axial mobility from the yieldable nature of the protrusion or protrusions disposed thereon. Thus, the locking tube, whilst readily permitting of being deliberately moved between its locking and unlocking positions, has excellent collapse resistance and hence sufficient strength to hold the bulge on the slotted guide-thimble end portion securely locked in mating engagement with the annular groove within the adapter-plate passageway when desired.

Still a further advantage resides in that the or each yieldable protrusion on the locking tube extends through the associated slot in the guide-thimble end portion so as to mate, when in the locking position, with the groove in the sidewall of the associated adapter-plate passageway. This enables the protrusion to cooperate with a ledge within the passageway in a manner preventing axial movement of the locking tube substantially beyond its locking position, and thereby preventing accidental axial displacement of the locking tube outwardly of the guide-thimble end portion, e.g. due to vibration or shock occurring during reactor operation.

The or each protrusion on the locking tube preferably is defined by a spring and, more particularly, an elongate leaf spring which is attached to the locking tube in cantilevered fashion, extends axially alongside the locking tube and is slidably received in the elongate slot of the guide-thimble end portion, and has an intermediate portion defining the protrusion proper. The elongate slot in the guide-thimble end portion includes an enlarged portion of such width and length as to accommodate the leaf spring, when the locking tube is in its unlocking position, with sufficient clearance to ensure non-interference of the leaf spring with the guide-thimble end portion during resilient collapse thereof.

A preferred embodiment of the invention will now be described, by way of example only, with reference to the accompanying drawings, in which:

Figure 1 is a side elevational view, with parts partially sectioned and broken away for purposes of clarity, of a reconstitutable fuel assembly shown in vertically foreshortened form;

Figure 2 is a sectioned, exploded view of the components of the improved attaching structure embodying the invention;

Figure 3 is a top plan view, as seen in the direction of the arrows on line 3—3 of Figure 2 of the locking tube of the improved affecting structure;

Figure 4 is an elevational view of the locking tube as seen after rotation thereof through ninety degrees from its position shown in Figure 2;

Figure 5 is a top plan view of the locking tube shown in Figure 4, as seen in the direction of the arrows on line 5—5 of Figure 4;

Figure 6 is a top plan view of the upper end portion of the guide thimble, as seen in the direction of the arrows on line 6—6 of Figure 2;

Figure 7 is an elevational view of the guide-thimble end portion and the locking tube inserted in a locking position therein;

Figure 8 is an elevational view similar to Figure 7 but showing the locking tube disposed in an unlocking position within the guide-thimble end portion;

Figure 9 is a fragmentary top plan view of the top-nozzle adapter plate illustrating one of the adapter-plate passageways together with the guide-thimble end portion disposed therein and the locking tube disposed within the guide-thimble end portion in its locking position;

Figure 10 is a sectional view taken along line 10—10 of Figure 9;

Figure 11 is a sectional view similar to that of Figure 10 but taken along line 11—11 of Figure 9;

Figure 12 is a fragmentary top plan view similar to Figure 9, but illustrating the locking tube in its unlocking position;

Figure 13 is a sectional view taken along line 13—13 of Figure 12; and

Figure 14 is another sectional view similar to Figure 13 but taken along line 14—14 of Figure 12.

In the following description, like reference characters designate like or corresponding parts throughout the several views, and terms such as "forward", "rearward", "left", "right", "upwardly", "downwardly", and the like, are employed as words of convenience not to be construed as limiting terms.

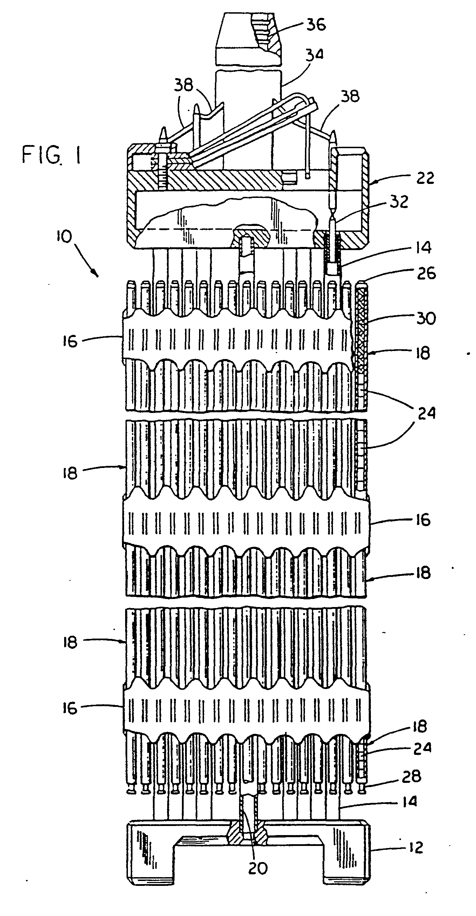

Referring now to the drawings, and particularly to Figure 1, the reconstitutable nuclear fuel assembly illustrated therein and generally designated with reference numeral 10 basically comprises a lower end structure or bottom nozzle 12 for supporting the assembly on the lower core plate (not shown) in the core region of a reactor (not shown), control-rod guide tubes or thimbles 14 extending upward from the bottom nozzle 12, transverse grids 16 spaced along the guide thimbles 14, an organized array of elongate fuel rods 18 transversely spaced and supported by the grids 16, an instrumentation tube 20 located in the center of the fuel assembly, and an upper end structure or top nozzle 22 removably attached to upper end portions of the guide thimbles 14 in a manner fully described below.

Each of the fuel rods 18 contains nuclear fuel pellets 24 made of fissile material, and has its opposite ends sealed by means of end plugs 26, 28, a plenum spring 30 being disposed between the upper end plug 26 and the stack of pellets 24 to maintain the latter firmly stacked. During use, a liquid moderator/coolant such as water, or water containing boron, is pumped upwardly through the fuel assemblies of the core in order to extract therefrom heat for the production of useful work.

The fission process is controlled by means of control rods 32 which are axially movable in the respective guide thimbles 14 by means of a rod cluster control mechanism 34 associated with the top nozzle 22 and including a hub member 36 with radial arms 38 each of which has at least one of the control rods 32 connected thereto, all as well known in the art.

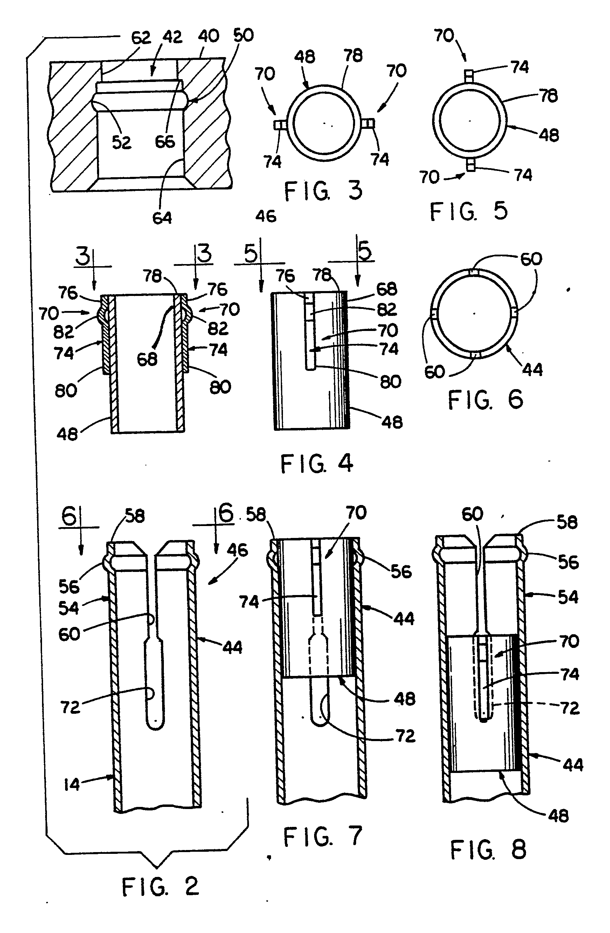

The top nozzle 22 has a lower adapter plate 40 with a plurality of control-rod passageways formed therethrough for receiving, as aforesaid, the upper end portions of the guide thimbles on which the top nozzle is mounted and to which it is attached. In Figure 2, which illustrates the attaching structure embodying the invention, there are shown one of the control-rod passageways designated 42, and one of the guide-thimble upper end portions designated 44. The attaching structure as a whole is generally designated with numeral 46, and it includes the passageway 42 and the guide-thimble end portion 44.

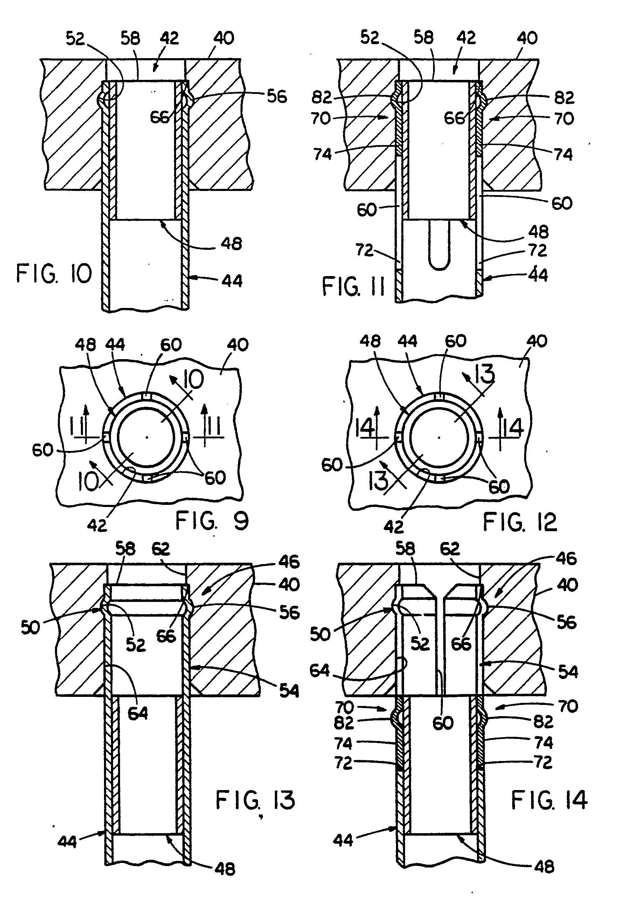

As seen best from Figures 2, 13 and 14, the top-nozzle attaching structure 46 associated with each passageway 42 and guide-thimble end portion 44 includes an outer socket 50 defined in the top-nozzle adapter plate 40 by the passageway 42 and having an annular groove 52 circumferentially formed in the wall thereof, an inner socket 54 defined by the upper end portion 44 of the guide thimble 14 having an annular bulge 56 circumferentially formed thereon, and a locking tube 48 inserted in the inner socket 54 to maintain it in locking engagement with the outer socket 50.

The annular bulge 56 on the guide-thimble end portion 44 is disposed only a short distance below the upper end 58 thereof, and the thimble end portion 44 is provided with a plurality of elongate axial slots 60 to permit resilient collapse of the slotted end portion to a compressed condition enabling the annular bulge 56 thereon to be moved through the passageway for engagement with or disengagement from the annular groove 52. The annular bulge 56 mates with the annular groove 52 when the guide-thimble end portion 44 is inserted into the adapter-plate passageway 42 and resiliently expands as the bulge 56 comes into registry with the groove 52.

More particularly, the passageway 42 extending through the adapter plate 40 and defining the outer socket 50 consists of an upper bore 62 and a lower bore 64. The lower bore 64 is of considerably greater axial length than the upper bore 62 and contains the annular groove 52 which is spaced a short distance below a downwardly facing ledge 66 formed at the juncture between the upper and lower bores 62, 64 due to the fact that the lower bore 64 has a larger diameter than the upper bore 62. The ledge 66 serves as a stop or axial-alignment guide cooperating with the upper end 58 of the guide-thimble end portion 44 to assure proper axial positioning of the latter within the passageway 42.

Referring now to Figures 2 to 14 in general, the attaching structure 46 according to the invention includes a locking tube 48 which has a continuous cylindrical wall configuration and is mounted within the guide-thimble end portion 44 for axial movement therein between an upper or locking position, (see Figures 7, 10 and 11) and a lower or unlocking position (see Figures 8, 13 and 14). When in its locking position, the locking tube 48 has its upper portion 68 coextensive with the inner and outer sockets 54, 50 to retain the inner socket 54 in locking engagement with the outer socket 50. On the other hand, when the locking tube 48 is at its unlocking position, its upper portion 68 is located below the inner and outer sockets 54, 50 to permit dislodgement or unseating of the inner socket 54 from the outer socket 50 and thereby withdrawal of the thimble-end portion 14 from the passageway 42.

Also in accordance with the invention, the locking tube 48 has thereon protrusions 70 projecting radially from the exterior thereof and the guide-thimble end portion 44 has enlarged openings 72 defined therein at the lower ends of the axial slots 60. Preferably, the locking tube has two such protrusions 70 which are spaced 180° apart circumferentially about the upper portion 68 of the locking tube and extend radially thereof through two of the four axial slots 60 in the guide-thimble end portion 44. It will be recalled that the four axial slots 60 in the guide-thimble 44, which are circumferentially spaced 90 degrees apart, extend from a location below the annular bulge 56 upwardly through the bulge and to the upper end 58 of the guide-thimble end portion above the bulge so as to permit compression and elastic collapse of the guide-thimble end portion 44 for the purpose of allowing the bulge 56 to be moved to and from its locking relationship with the annular groove 52 in the adapter-plate passageway 42.

Preferably, each of the protrusions 70 takes the form of a resiliently yieldable leaf spring 74 attached at one end 76 thereof, e.g., welded at its upper end, to an upper end portion 78 of the locking tube 48. The spring 74 extends in cantilevered fashion axially downward along the upper portion 68 of the locking tube 48 and generally parallel with one of the slots 60 in the guide-thimble end portion 44. The spring 74 is free at its opposite, lower end 80 and includes an outwardly protruding portion 82 which extends through and beyond the slot 60.

In summary, each spring-like protrusion 70 extends along the locking-tube upper portion 68 and outwardly through one of the slots 60 in the guide-thimble end portion 44. Furthermore, each spring-like protrusion 70 is yieldable to enable its protruding portion 82 to be moved into engagement with the groove 52 in the passageway 42 of the adapter plate 40 for retaining the locking tube 48 in its upper or locking position, and also to enable its protruding portion 82 to be withdrawn from the groove 52 for the purpose of moving the locking tube 48 to the lower or unlocking position thereof.

Upon movement of the locking tube 48 to its unlocking position, the protrusions 70 thereon are received in the elongate, enlarged openings 72 which are defined in the guide-thimble end portion 44 below the annular bulge 56 and the respective slots 60 and are connected with the latter. Each of the openings 72 is laterally (i.e. circumferentially of the locking tube) enlarged in order to provide sufficient clearance for the associated protrusion 70 to assure its non-interference with the guide-thimble end portion 44 in resiliently collapsing. As seen best from Figure 11, the protrusions 70 also coact with the downwardly facing ledge 66 in the associated adapter-plate passageway 42 to prevent undesired axial outward displacement of the locking tube from the passageway 42.

## Claims

1. A reconstitutable nuclear fuel assembly including a top nozzle (22) with an adapter plate (40) having at least one passageway (42) therethrough, at least one guide thimble (14) having an upper end portion (44) extending into said passageway, and attaching structure for releasably affixing the adapter plate to said end portion of the guide thimble, said passageway having an annular groove (52) formed circumferentially in the peripheral wall thereof, said guide-thimble end portion having formed thereon an annular bulge (56) which mates with said annular groove, and having formed therein at least one elongate slot (60) which extends axially from the end of the guide-thimble end portion and through said annular bulge to enable resilient collapse of the guide-thimble end portion and thereby dislodgement of the annular bulge from the annular groove, said attaching structure including a locking tube (48) inserted in said guide-thimble end portion for releasably locking the annular bulge in mating engagement with the annular groove, characterized in that said locking tube (48):

(a) is axially slidable within said guide-thimble end portion (44) between a locking position and an unlocking position for preventing and permitting, respectively, resilient collapse of the guide-thimble end portion;

(b) has a continuous, substantially cylindrical wall configuration; and

(c) has disposed on its outer periphery at least one protrusion (70) which extends radially through said elongate slot (60) in the guide-thimble end portion, said protrusion (70) projecting into said annular groove (52) in said passageway (42) when the locking tube is in said locking position, and being yieldable to permit dislodgement of the protrusion from said annular groove (52) and thereby permit movement of the locking tube (48) to said unlocking position.

2. A reconstitutable nuclear fuel assembly according to claim 1, characterized in that said protrusion (70) is defined by a spring (74) secured to the locking tube (48).

3. A reconstitutable nuclear fuel assembly according to claim 2, characterized in that said spring (74) is an elongate leaf spring which is attached to the locking tube (48) in cantilevered fashion, extends axially alongside the locking tube and is slidably received in said elongate slot (60) of the guide-thimble end portion (44), and has an intermediate portion (82) defining said protrusion (70).

4. A reconstitutable nuclear fuel assembly according to claim 3, characterized in that said elongate slot (60) includes an enlarged portion (72) of such width and length as to accommodate said leaf spring (74) with clearance when the locking tube (48) is in said unlocking position.

5. A reconstitutable nuclear fuel assembly according to claim 1, 2, 3 or 4, characterized in that said passageway (42) in the adapter plate (40) defines a socket (50) consisting of two bores (62, 64) which have different diameters and define a ledge (66) facing the bore (64) with the larger diameter, said bore (64) with the larger diameter having said annular groove (52) formed and said guide-thimble end portion (44) received therein, and said protrusion being cooperable with said ledge (66) to prevent movement of the locking tube (48) substantially beyond said locking position thereof in a direction away from the unlocking position.

6. A reconstitutable nuclear fuel assembly according to any one of the preceding claims, characterized in that the locking tube (48) has an additional said protrusion (70) disposed on the outer periphery thereof, the two protrusions (70) being diametrically opposed to each other and each extending radially through a separate said elongate slot (60) in the guide-thimble end portion (44).

## Patentansprüche

1. Ein wiederherstellbarer Kernbrennstoffsatz bestehend aus einer Kopfdüse (22) mit einer Adapterplatte (40), durch die mindestens ein Durchlass (42) führt, wobei mindestens eine Führungsmuffe (14) mit einem oberen Endstück (44) in den Durchlass ragt und die Adapterplatte durch eine Vorrichtung lösbar am Endstück der Führungsmuffe befestigt ist, in der Umfangswand des Durchlasses eine Ringnut (52) vorgesehen ist, in die ein Ringwulst (56) am Endstück der Führungsmuffe paßt, in dem mindestens ein Längsschlitz (60) vorgesehen ist, der ausgehend vom Ende dieses Endstücks axial durch den Ringwulst führt, um ein federndes Nachgeben des Endstücks und damit ein Lösen des Ringwulstes aus der Ringnut gestattet, wobei die Vorrichtung zur Befestigung der Adapterplatte ein Verriegelungsrohr (48) aufweist, das in das Endstück der Führungsmuffe gesteckt ist, um den Ringwulst mit Paßsitz in der Ringnut lösbar zu verriegeln, dadurch gekennzeichnet, daß das Verriegelungsrohr (48):

(a) innerhalb des Endstücks (44) der Führungsmuffe zwischen einer Verriegelungs- und einer Entriegelungsstellung axial verschiebbar ist, um ein federndes Nachgeben des Endstücks der Führungsmuffe zu gestatten, bzw. zu verhindern;

(b) eine durchgehende, in wesentlichen zylindrische Wand aufweist; und

(c) an seinem Außenumfang mindestens einen Vorsprung (70) aufweist, der radial durch den Längsschlitz (60) im Endstück der Führungsmuffe ragt, wobei dieser Vorsprung (70) in die Ringnut (52) im Durchlass (42) eingreift, wenn das Verriegelungsrohr in der Verriegelungsstellung ist und das ferner nachgiebig ist, um ein Lösen des Vorsprungs aus der Ringnut (52) zu gestatten und dabei ermöglicht, daß das Verriegelungsrohr (48) in die Entriegelungsstellung bewegt wird.

2. Ein wiederherstellbarer Kernbrennstoffsatz nach Anspruch 1, dadurch gekennzeichnet, daß der Vorsprung (70) eine Feder (74) ist, die am Verriegelungsrohr (48) befestigt ist.

3. Ein wiederherstellbarer Kernbrennstoffsatz nach Anspruch 2, dadurch gekennzeichnet, daß die Feder (74) aus einer länglichen Blattfeder besteht, die axial entlang des Verriegelungsrohrs (48) freitragend angebracht ist und gleitend in den Längsschlitz (60) des Endstücks (44) der Führungsmuffe eingreift und einen Zwischenteil (82) aufweist, der den Vorsprung (70) bildet.

4. Ein wiederherstellbarer Kernbrennstoffsatz nach Anspruch 3, dadurch gekennzeichnet, daß der Längsschlitz (60) einen erweiterten Abschnitt (72) aufweist, dessen Breite und Länge so bemessen sind, daß er die Blattfeder (74) mit Spiel aufnimmt, wenn das Verriegelungsrohr (48) in der Entriegelungsstellung ist.

5. Ein wiederherstellbarer Kernbrennstoffsatz nach Anspruch 1, 2, 3 oder 4, dadurch gekennzeichnet, daß der Durchlaß (42) in der Adapterplatte (40) eine Fassung (50) bestehend aus zwei Bohrungen (62, 64) begrenzt, die verschiedene Durchmesser aufweisen und einen Absatz (66) bestimmen, der gegen die Bohrung (64) mit dem größeren Durchmesser gerichtet ist, wobei in dieser Bohrung (64) die Ringnut (52) angeordnet ist und das Endstück (44) der Führungsmuffe eingreift, wobei der Vorsprung mit dem Absatz (66) zusammenwirkt, um eine wesentliche Bewegung des Verriegelungsrohrs (48) weg von der Verriegelungsstellung zu verhindern.

6. Ein wiederherstellbarer Kernbrennstoffsatz nach einem der vorhergehenden Ansprüche, dadurch gekennzeichnet, daß am Außenumfang des Verriegelungsrohrs (48) ein weiterer Vorsprung (70) vorgesehen ist, wobei die beiden Vorsprünge (70) diametral gegenüberliegend angeordnet sind und jeder Vorsprung radial durch einen gesonderten Längsschlitz (60) im Endstück (44) der Führungsmuffe ragt.

## Revendications

1. Assemblage combustible nucléaire reconstituable comprenant un embout supérieur (22) avec une plaque (40) d'adaptation ayant au moins un chemin (42) de passage à travers elle, au moins une chaussette (14) de guidage ayant une partie d'extrémité supérieure (44) s'étendant dans ledit chemin de passage, et une structure de fixation pour fixer de façon démontable la plaque d'adaptation à ladite partie d'extrémité de la chaussette de guidage, ledit chemin de passage ayant une cannelure annulaire (52) formée de façon circonférentielle dans la paroi périphérique de ce dernier, ladite partie d'extrémité de la chaussette de guidage ayant, formé sur celle-ci, un renflement annulaire (56) qui s'adapte à ladite cannelure annulaire, et ayant formé à l'intérieur de celle-ci au moins une rainure allongée (60) qui s'étend axialement depuis la partie d'extrémité de la chaussette de guidage et à travers ledit renflement annulaire pour permettre une déformation élastique de la partie d'extrémité de la chaussette de guidage, et par conséquent le dégagement du renflement annulaire de la cannelure annulaire, ladite structure de fixation comportant un tube (48) de blocage inséré dans ladite partie d'extrémité de la chaussette de guidage pour bloquer de façon démontable le renflement annulaire en engagement d'accouplement avec la cannelure annulaire, caractérisé par le fait que ledit tube (48) de blocage:

(a) peut coulisser axialement à l'intérieur de ladite partie d'extrémité (44) de la chaussette de guidage, entre une position de blocage et une position de déblocage, pour empêcher et permettre, respectivement, la déformation élastique de la partie d'extrémité de la chaussette de guidage;

(b) a une configuration de paroi continue et sensiblement cylindrique; et

(c) présente sur sa périphérie extérieure au moins une saillie (70) qui s'étend radialement à travers ladite rainure allongée (60) dans la partie d'extrémité de la chaussette de guidage, ladite saillie (70) s'étendant dans ladite cannelure annulaire (52) dans ledit chemin (42) de passage quand le tube de blocage est dans ladite position de blocage, et pouvant céder pour permettre de dégagement de la saillie de ladite cannelure annulaire (52), et de ce fait permettre le mouvement du tube (48) de blocage vers ladite position de déblocage.

2. Assemblage combustible nucléaire reconstituable selon la revendication 1, caractérisé par le fait que ladite saillie (70) est définie par un ressort (74) fixé au tube (48) de blocage.

3. Assemblage combustible nucléaire reconstituable selon la revendication 2, caractérisé par le fait que ledit ressort (74) est un ressort allongé à lames qui est fixé au tube (48) de blocage dans une position en porte-à-faux, s'étendant axialement le long du tube de blocage, et est reçu de façon coulissante dans ladite rainure allongée (60) de la partie d'extrémité (44) de la chaussette de guidage, et a une partie intermédiaire (82) définissant ladite saillie (70).

4. Assemblage combustible nucléaire reconstituable selon la revendication 3, caractérisé par le fait que ladite rainure allongée (60) comporte une partie agrandie (72) dont la largeur et la longueur permettent de loger ledit ressort (74) à lames avec un certain espace libre quand le tube (48) de blocage est dans ladite position de déblocage.

5. Assemblage combustible nucléaire reconstituable selon l'une quelconque des revendications 1, 2, 3 ou 4, caractérisé par le fait que la chemin (42) de passage dans la plaque (40) d'adaptation définit une cavité (50) constituée de deux alésages (62, 64) de diamètres différents et définissant un épaulement (66) du côté de l'alésage (64) de plus grand diamètre, ledit alésage (64) de plus grand diamètre présentant ladite cannelure annulaire (52) formée en cet endroit et recevant à l'intérieur ladite partie l'extrémité (44) de la chaussette de guidage, ladite saillie pouvant coopérer avec ledit épaulement (66) pour empêcher le mouvement du tube (48) de blocage sensiblement au-delà de ladite position de blocage de celui-ci dans la direction opposée à la position de déclocage.

6. Assemblage combustible nucléaire reconstituable selon l'une quelconque des revendications précédentes, caractérisé par le fait que la tube (48) de blocage a une telle saillie supplémentaire (70) disposée à sa périphérie, les deux saillies (70) étant diamètralement opposées l'une à l'autre et s'étendant chacune radialement à travers une rainure allongée séparée (60) dans la partie d'extrémité (44) de la chaussette de guidage.

FIG. 1

FIG. 2

FIG. 3

FIG. 4

FIG. 5

FIG. 6

FIG. 7

FIG. 8

EP 0 221 641 B1

FIG. 10

FIG. 11

FIG. 9

FIG. 12

FIG. 13

FIG. 14

3